# EUROPÄISCHE PATENTSCHRIFT

(11) **EP 0 687 519 B1**
(45) Veröffentlichungstag und Bekanntmachung des Hinweises auf die Patenterteilung: **16.12.1998**
(21) Anmeldenummer: 94109231.4
(22) Anmeldetag: 15.06.1994
(51) Int. Cl.: B23K 26/00, B23K 33/00

(54) **Verfahren und Vorrichtung zum Verschweissen von verzinkten Stahlblechen mittels Laserstrahlen**
Process and device for welding tinned sheet metal elements by means of laser beams
Procédé et dispositif de soudage de tôles en acier zingué au moyen de faisceaux laser

(43) Veröffentlichungstag der Anmeldung: 20.12.1995
(73) Patentinhaber: INPRO INNOVATIONSGESELLSCHAFT FÜR FORTGESCHRITTENE PRODUKTIONSSYSTEME IN DER FAHRZEUGINDUSTRIE MBH, 10787 Berlin (DE)
(72) Erfinder: Hammer, Timo c/o INPRO GmbH, D-10587 Berlin (DE); Dommaschk,Ralf,c/o INPRO GmbH, D-10587 Berlin (DE)
(74) Vertreter: Hoffmann, Klaus-Dieter, Dipl.-Ing.

(56) Entgegenhaltungen:
- EP-A- 0 337 182
- EP-A- 0 365 229
- DE-A- 3 235 547

## Beschreibung

Die Erfindung betrifft ein Verfahren zum Verschweißen von verzinkten Stahlblechen mittels Laserstrahlen, wobei eine gerichtete Verformung des Oberbleches bis zu dessen Linienberührung bewirkt und anschließend das Oberblech und das Unterblech auf der Linienberührung durch einen fokussierten Laserstrahl miteinander verschweißt werden.

Die Erfindung betrifft weiterhin eine Vorrichtung zur Durchführung des Verfahrens,mit einem Laser und einer Laseroptik.

Bei einem bekannten Laserschweißverfahren der eingangs erwähnten Art (EP-A-337182) werden Entgasungskammern gebildet, in denen die sich beim Verschweißen der verzinkten Bleche bildenden gasförmigen Beschichtungsstoffe aufgenommen werden. In der EP-A-337182 wird auch eine Vorrichtung zum Verschweißen von Blechbauteilen, insbesondere von verzinkten Stahlblechen mittels Laserstrahlen, mit einem Laser und einer Laseroptik beschrieben.

Beim Laserstrahlschweißen von Blechbauteilen stellt der Fügespalt einen wesentlichen Verfahrensparameter dar. Er begrenzt die Schweißgeschwindigkeit bzw. macht eine sichere Schweißung nicht möglich.

Um den Fügespalt zu reduzieren, ist es bekannt, eine Spannrolle als mitlaufendes Spannelement zu verwenden, die am Arbeitskopf eines Roboters montiert ist und beim Schweißen neben der Schweißstelle auf die Stahlbleche drückt. Die Spannkraft wird dabei z.B. durch einen Pneumatikzylinder aufgebracht. Die verwendete Führungsmaschine muß die Spannkraft aufnehmen können.

Beim Verschweißen der verzinkten Stahlbleche mittels Laser entstehen die Schweißspritzer durch das schlagartig verdampfende Zink, das durch die Schmelze entweicht. Um eine spritzerfreie Schweißung mit guter Nahtqualität zu realisieren, muß das Zink aus dem Fügebereich entfernt oder ein genügend großes Volumen zur Verfügung gestellt werden, in das der Zinkdampf bei der Schweißung entweichen kann.

Werden mittels eines fokussierten Laserstrahls verzinkte Stahlbleche derart verschweißt, daß der Fügespalt zu Null wird und die verzinkten Blechseiten im Fügespalt liegen, treten im erhöhten Maße Schweißspritzer auf. Dadurch wird eine schlechte Nahtqualität erzielt und die Lebensdauer der Schutzgläser der Schweißoptiken stark reduziert.

Der Erfindung liegt die Aufgabe zugrunde, ein Verfahren und eine Vorrichtung zu dessen Durchführung gemäß der eingangs erwähnten Art zur Verfügung zu stellen, mit dem bzw. der durch vereinfachtes, erheblichen Bauraum für die Spanneinrichtung einsparendes Spannen der zu verschweißenden Stahlbleche ein spritzerfreies Fügen letzterer und somit eine spritzerfreie Schweißung mit einwandfreier Nahtqualität erzielbar sind. Weiterhin soll für eine Reduzierung des Reibwertes der mitgeführten Spanntechnik sowie für eine Fügespaltreduzierung bei mitlaufender Spanntechnik gesorgt werden.

Diese Aufgabe wird erfindungsgemäß dadurch gelöst, daß zwischen den zu verschweißenden Stahlblechen in unmittelbarer Nähe der Schweißstelle Spannkräfte von einer mitlaufenden Spanneinrichtung auf die Stahlbleche aufgebracht werden und dem Schweißfokus des Laserstrahls vorlaufend die gerichtete Verformung des Oberbleches durch die Spanneinrichtung bewirkt wird.

Die Verformung der Stahlbleche wird während des erfindungsgemäßen Laserschweißverfahrens erzielt.

Vorzugsweise wird die gerichtete Verformung des Oberbleches als plastische und elastische Verformung zur Reduzierung des Fügespaltes der Stahlbleche verwendet.

Vorzugsweise werden weiterhin die dem Schweißfokus vorlaufende Linienberührung intervallmäßig durch die Hubbewegung eines mit der mitlaufenden Spanneinrichtung gekoppelten, in Schwingung versetzten Piezoelementes erzeugt und seitlich der Linienberührung Entgasungstaschen hergestellt.

Vorteilhafterweise kann die Verformung des Oberbleches unter Bildung der dem Schweißfokus vorlaufenden Linienberührung des Oberbleches mit dem Unterblech durch Einbringen von Druckeigenspannungen in den oberen Bereich des Oberbleches derart erfolgen, daß im unteren Bereich des Oberbleches Zugspannungen auftreten und die Linienberührung unter Wölbung des Oberbleches vom Unterblech weg gebildet und Entgasungstaschen erzeugt werden.

Durch die gerichtete Verformung des Oberbleches kann der beim Schweißen entstehende Zinkdampf in die seitlich von der Linienberührung gebildeten Entgasungstaschen entweichen.

Die Erfindung gewährleistet eine praktisch spritzerfreie Schweißung von verzinkten Stahlblechen bei einwandfreier Nahtqualität.

Vorzugsweise kann die Verformung des Oberbleches durch Erregung eines piezoelektrischen Schwingers bewirkt werden, dessen Schwingungen auf in den piezoelektrischen Schwinger integrierte Druckstücke übertragen werden, die auf der Oberfläche des Oberbleches bewegt werden und von denen letzteres entsprechend den Schwingungen des piezoelektrischen Schwingers beaufschlagt wird.

Die gerichtete Verformung des Oberbleches kann auch durch ein magnetostriktives Element bewirkt werden.

Die erfindungsgemäße Vorrichtung zeichnet sich dadurch aus, daß eine mitlaufende Spanneinrichtung vorgesehen ist, von der in unmittelbarer Nähe der Schweißstelle auf die Stahlbleche Spannkräfte aufbringbar sind, daß die Spanneinrichtung in Schweißrichtung im Verhältnis zum Schweißfokus vorlaufend mit dem Oberblech in Eingriff bringbar ist, und daß zwischen einem die Spannkraft auf das Oberblech ausübenden, mitlaufenden Spannelement der Spanneinrichtung und deren Spannkrafterzeugung ein in Schwingungen versetzbares Piezoelement in der Spanneinrichtung integriert ist, das zusammen mit dem Spannelement bewegbar und von dem während des Spannvorgangs intervallmäßig Druck auf das Spannelement ausübbar ist.
Vorzugsweise beträgt der mechanische Hub des Piezoelementes etwa 0,3mm und liegen die von dem Piezoelement ausgeübten Kräfte im kN-Bereich.
Das Spannelement kann von einem piezoelektrischen Schwinger gebildet sein, in dem Druckstücke integriert sind, die auf der Oberfläche des Oberbleches bewegbar und von denen letzteres in Schweißrichtung vor dem Schweißfokus entsprechend den Schwingungen des piezoelektrischen Schwingers beaufschlagbar ist.

Das Pieozoelement stützt sich an der trägen Masse der Spanneinrichtung ab und drückt das Oberblech entsprechend seinem Hub nieder. Die Masse rutscht in der Impulspause des piezoelektrischen Elementes nach, das Piezoelement übt erneut Druck aus usw.,bis der Fügespalt sozusagen "zugenagelt" ist.

Die Erfindung ermöglicht den Einsatz von Führungsmaschinen beim Laserschweißen von verzinkten Stahlblechen, die eine zu herkömmlichen Führungsmaschinen wesentlich kleinere Handlast aufweisen. Weiterhin sorgt die Erfindung für eine beträchtliche Reduzierung des erforderlichen Bauraums. So verringert sich im Vergleich zu der bislang üblicherweise eingesetzten Spannrolle der Bauraum der Spanneinrichtung der erfindungsgemäßen Vorrichtung beachtlich. Die Erfindung macht es möglich, daß auch sehr kleine Radien an den Blechbauteilen bei deren Verschweißung umfahren werden können.

Von besonderem Vorteil ist, daß sich durch das Vorsehen eines Piezoelementes zwischen dem Stempel und der Spannkrafterzeugung der Spanneinrichtung und durch die Hubbewegung des Piezoelementes aufgrund seiner Inschwingungsversetzung während des Spannvorgangs der Reibwert des mitgeführten Spannelementes, d.h. des Stempels reduzieren läßt, und zwar offensichtlich basierend auf dem Puls-Pausenverhältnis des schwingenden Piezokristalls. Es treten somit geringere Querkräfte auf, die verhältnismäßig einfach aufgefangen werden können.

Die Erfindung wird nun anhand der Zeichnungen erläutert. In diesen sind:
Fig. 1 die Darstellung eines prinzipiellen Aufbaus der Vorrichtung zum Verschweißen von Stahlblechen bei Einsatz eines Piezoelementes als mitlaufendes Spannelement,
Fig. 2 eine schaubildliche Darstellung, aus der die Erzeugung einer Linienberührung zwischen Ober- und Unterblech bei Einsatz eines dem Schweißfokus in Schweißrichtung vorlaufenden, von einem Piezoelement beaufschlagbaren Stempels,
Fig. 3 eine Darstellung, aus der die Einbringung von Druckeigenspannungen in das Oberblech hervorgeht,
Fig. 4 eine Darstellung, die die Verformung des Oberbleches unter Bildung von Entgasungstaschen nach Einbringung der Druckeigenspannungen in das Oberblech gemäß Fig. 3 wiedergibt, und
Fig. 5 die Darstellung eines prinzipiellen Aufbaus einer anderen Ausführungsform der Vorrichtung zum Verschweißen von Stahlblechen mit einem zum Laserstrahl in Schweißrichtung vorlaufenden piezoelektrischen Schwinger.

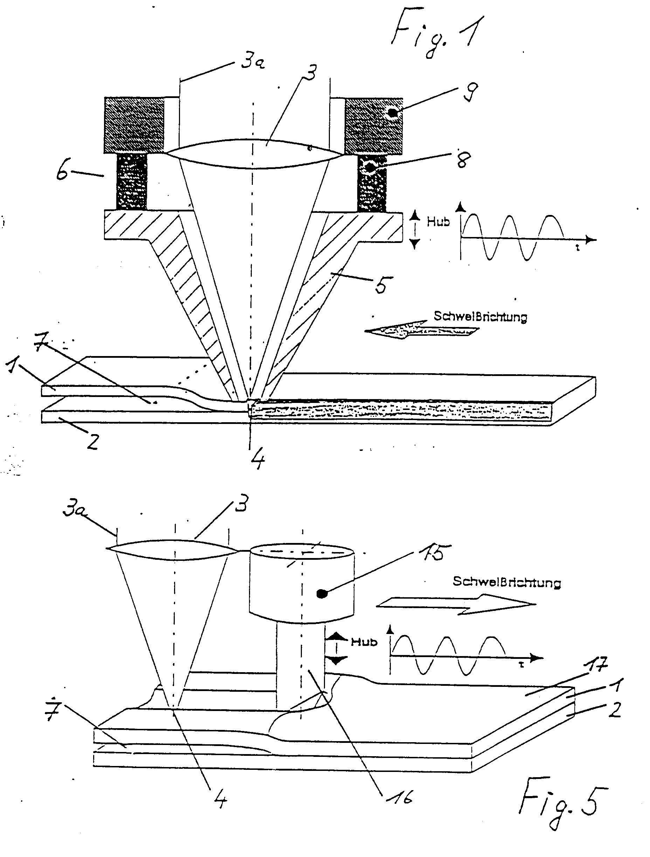

Aus Fig. 1 geht der prinzipielle Aufbau der Vorrichtung zum Verschweißen von Stahlblechen 1, 2 mittels eines Laserstrahls 3a hervor, der durch eine Laseroptik 3 an der Schweißstelle fokussiert ist. Ein mitlaufendes Spannelement 5 einer Spanneinrichtung 6 der Vorrichtung läßt den Fügespalt 7 zwischen dem Oberblech 1 und dem Unterblech 2 an der Schweißstelle 4 zu Null werden und ist mit einem mitlaufenden Piezoelement 8 kombiniert und von diesem druckmäßig beaufschlagbar. Das Piezoelement 8 stützt sich an der trägen Masse 9 der Spanneinrichtung und drückt bei seinem Hub infolge des piezoelektrischen Effektes (vgl. Diagramm in Fig. 1, das den Verlauf der Schwingung des Piezokristalls über die Zeit zeigt) das Oberblech 1 entsprechend seinem Hub intervallmäßig nieder. Die träge Masse 9 rutscht in der Impulspause des piezoelektrischen Elementes nach, das Piezoelement 8 drückt erneut usw., bis der Fügespalt 7 "zugenagelt" ist. Durch geschickte Anordnung des Piezoelementes 8 kann ein mechanischer Hub bis ca. O,3 mm erzielt werden, wobei Kräfte mit kN-Bereich erreichbar sind und der benötigte Bauraum verhältnismäßig gering ist.

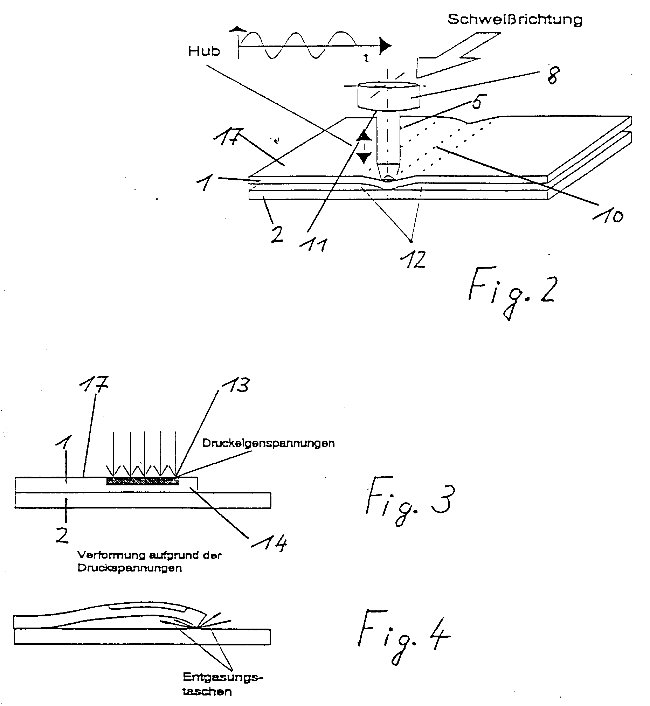

Aus Fig. 2 geht deutlich die Erzeugung einer Linienberührung 10 zwischen dem Ober- und dem Unterblech 1 bzw. 2 durch gerichtete Verformung des Oberbleches 1 hervor. Hierbei läuft ein das Spannelement 5 der Vorrichtung bildender Druckstößel, der an seinem oberen Ende 11 mit dem Piezoelement 8 verbunden und von diesem entsprechend dessen Hub druckmäßig beaufschlagt wird, dem Schweißfokus in Schweißrichtung voraus und erzeugt durch die Linienberührung 10 zwischen dem Ober- und dem Unterblech 1 bzw. 2 seitliche Entgasungstaschen 10 mit genügend großem Volumen, in das der Zinkdampf bei der anschließenden Schweißung auf der Linienberührung entweichen kann.

Die Fig. 3 und 4 veranschaulichen eine weitere Möglichkeit zur Realisierung der Entgasungstaschen 12 für den Zinkdampf unter Bildung der Linienberührung 10 zwischen dem Oberblech 1 und dem Unterblech 2 durch das Einbringen von Druckeigenspannungen in das Oberblech 1 (vgl. Fig. 3). Hierbei entstehen, wie Fig. 4 verdeutlicht, in dem oberen Bereich 13 des Oberbleches 1 Druckspannungen und in dem unteren Bereich 14 des Oberbleches 1 Zugspannungen, wodurch sich das Oberblech 1 unter Ausbildung der Linienberührung 10 mit dem Unterblech 2 sowie der Entgasungstaschen 12 in der aus Fig. 4 ersichtlichen Weise verformt.

Die Einbringung der genannten Verformung des Oberbleches 1 kann, wie aus Fig. 5 hervorgeht, durch einen piezoelektrischen Schwinger 15 mit entsprechenden Druckstücken 16 erfolgen, die über die Oberfläche 17 des Oberbleches 1 bewegt werden. Der piezoelektrische Schwinger 16 läuft, wie aus Fig. 5 ersichtlich ist, in Schweißrichtung dem Laserstrahl 3a voraus.

### Bezugszeichenliste:

- 1: Oberblech
- 2: Unterblech
- 3: Laseroptik, 3a Laserstrahl
- 4: Schweißstelle
- 5: Spannelement, Druckstößel
- 6: Spanneinrichtung
- 7: Fügespalt
- 8: Piezoelement
- 9: träge Masse
- 10: Linienberührung
- 11: oberes Ende des Druckstößels
- 12: Entgasungstaschen
- 13: obere Bereich des Oberbleches
- 14: untere Bereich des Oberbleches
- 15: piezoelektrischer Schwinger
- 16: Druckstücke
- 17: Oberfläche des Oberbleches

## Patentansprüche

1. Verfahren zum Verschweißen von verzinkten Stahlblechen (1,2) mittels Laserstrahlen, wobei eine gerichtete Verformung des Oberbleches (1) bis zu dessen Linienberührung (10) mit dem Unterblech (2) bewirkt und anschließend das Oberblech (1) und das Unterblech (2) auf der Linienberührung (10) durch einen fokussierten Laserstrahl (3a) miteinander verschweißt werden,
dadurch gekennzeichnet,
daß zwischen den zu verschweißenden Stahlblechen (1,2) in unmittelbarer Nähe der Schweißstelle (4) Spannkräfte von einer mitlaufenden Spanneinrichtung (5,6) auf die Stahlbleche (1,2) aufgebracht werden und dem Schweißfokus des Laserstrahls (3a) vorlaufend die gerichtete Verformung des Oberbleches (1) durch die Spanneinrichtung (5,6) bewirkt wird.

2. Verfahren nach Anspruch 1, dadurch gekennzeichnet, daß die gerichtete Verformung des Oberbleches (1) als plastische und elastische Verformung zur Reduzierung des Fügespaltes (7) der Stahlbleche (1,2) verwendet wird.

3. Verfahren nach Anspruch 1, dadurch gekennzeichnet, daß die dem Schweißfokus vorlaufende Linienberührung (10) zwischen dem Ober- und dem Unterblech (1 bzw. 2) intervallmäßig durch die Hubbewegung eines mit der mitlaufenden Spanneinrichtung (6) gekoppelten, in Schwingungen versetzten Piezoelementes (8) erzeugt und seitlich der Linienberührung (10) Entgasungstaschen (12) hergestellt werden.

4. Verfahren nach Anspruch 1, dadurch gekennzeichnet, daß die Verformung des Oberbleches (1) durch Einbringen von Druckeigenspannungen in den oberen Bereich (13) des Oberbleches (1) unter Bildung der dem Schweißfokus vorlaufenden Linienberührung (10) des Oberbleches (1) mit dem Unterblech (2) derart erfolgt, daß im unteren Bereich (14) des Oberbleches (1) Zugspannungen auftreten, letzteres sich vom Unterblech (2) weg nach oben wölbt und seitlich der Linienberührung (10) Entgasungstaschen (12) gebildet werden.

5. Verfahren nach Anspruch 3, dadurch gekennzeichnet, daß die Verformung des Oberbleches (1) durch Erregen eines piezoelektrischen Schwingers (15) bewirkt wird, dessen Schwingungen auf in den piezoelektrischen Schwinger (15) integrierte Druckstücke (16) übertragen werden, die auf der Oberfläche (17) des Oberbleches (1) bewegt werden und von denen letzteres entsprechend den Schwingungen des piezoelektrischen Schwingers (15) beaufschlagt wird.

6. Verfahren nach Anspruch 1 und 2, dadurch gekennzeichnet, daß die gerichtete Verformung des Oberbleches (1) durch ein magnetostriktives Element bewirkt wird.

7. Vorrichtung zur Durchführung des Verfahrens nach einem der Ansprüche 1 bis 5, mit einem Laser und einer Laseroptik (3),
dadurch gekennzeichnet, daß
eine mitlaufende Spanneinrichtung (6) vorgesehen ist, von der in unmittelbarer Nähe der Schweißstelle (4) auf die Stahlbleche (1,2) Spannkräfte aufbringbar sind, daß die Spanneinrichtung (6) in Schweißrichtung im Verhältnis zum Schweißfokus vorlaufend mit dem Oberblech (1) in Eingriff bringbar ist, und daß zwischen einem die Spannkraft auf das Oberblech (1) ausübenden, mitlaufenden Spannelement (5) der Spanneinrichtung (6) und deren Spannkrafterzeugung ein in Schwingungen versetzbares Piezoelement (8) in der Spanneinrichtung (6) integriert ist, das zusammen mit dem Spannelement (5) bewegbar und von dem während des Spannvorgangs intervallmäßig Druck auf das Spannelement (5) ausübbar ist.

8. Vorrichtung nach Anspruch 7, dadurch gekennzeichnet, daß der mechanische Hub des Piezoelementes (8) etwa 0,3 mm beträgt,und daß die von dem Piezoelement (8) ausgeübten Kräfte im kN-Bereich liegen.

9. Vorrichtung nach Anspruch 7 und 8, dadurch gekennzeichnet, daß das Spannelement (5) von einem piezoelektrischen Schwinger (15) gebildet ist, in dem Druckstücke (16) integriert sind, die auf der Oberfläche (17) des Oberbleches (1) bewegbar sind und von denen letzteres in Schweißrichtung vor dem Schweißfokus (4) entsprechend den Schwingungen des piezoelektrischen Schwingers (15) beaufschlagbar ist.

## Claims

1. Process and device for welding tinned sheet metal elements (1,2) by means of laser beams whereby a directed deformation of the top sheet metal element (1) is achieved down to its line contact (10) with the bottom sheet metal element (2) and subsequently the top sheet metal element (1) and the bottom sheet metal element (2) are welded together by means of a focused laser beam (3a),
characterized thereby,
that in the direct vicinity of the welding (4), between the sheet metal elements which are to be welded together (1,2), tension forces from a co-travelling tensioning device are applied (5,6) to the sheet metal elements (1,2) and, preceding the welding focus of the laser beam (3a), the directed deformation of the top sheet metal element (1) is achieved by the tensioning device (5,6).

2. Process in accordance with claim 1, characterized thereby, that the directed deformation of the top sheet metal element (1) is used as plastic and elastic deformation for the reduction of the joint gap (7) of the sheet metal elements (1,2).

3. Process in accordance with claim 1, characterized thereby, that the line contact (10) preceding the welding focus is achieved between the top and the bottom sheet metal (1 and/or 2) in intervals by means of the lift-movement of a piezo-element (8) which is coupled to the co-travelling tensioning device (6) set in vibrations and that at the side of the line contact (10) degassing pockets (12) are produced.

4. Process in accordance with claim 1, characterized thereby, that the deformation of the top sheet metal element (1) takes place in such manner through the application of internal pressure stresses in the upper area (13) of the top sheet metal element (1) with creation of the line contact (10), preceding the welding focus, of the top sheet metal element (1) with the bottom sheet metal element (2), that in the bottom area (14) of the top sheet metal element (1) tension stresses occur, that the latter bends upwards away from the bottom sheet metal element (2) and that degassing pockets (12) are formed at the side of the line contact (10).

5. Process in accordance with claim 3, characterized thereby, that the deformation of the top sheet metal element (1) is achieved by exciting a piezoelectric oscillator (15), whose vibrations are transferred to pressure pieces (16) integrated in the piezoelectric oscillator (15), whereby these pressure pieces (16) are moved on the surface (17) of the top sheet metal element (1) and the latter of them is impinged in accordance with the vibrations of the piezoelectric oscillator (15).

6. Process in accordance with claims 1 and 2, characterized thereby, that the directed deformation of the top sheet metal element (1) is achieved by a magnetostrictive element.

7. Device for conducting the process in accordance with the claims 1 to 5 with a laser and a laser optic (3),
characterized thereby, that
a co-travelling tensioning device (6) is provided from which, in the direct vicinity of the welding (4), tension forces are applicable on the sheet metal elements (1, 2), that the tensioning device (6) can, in the welding direction, be brought into contact - running forward in relation to the welding focus - with the top sheet metal element (1) and that between a co-travelling tensioning element (5), exerting the tension force on the top sheet metal element (1) of the tensioning device (6) and its tension force generation, a piezo-element (8), settable into vibrations, is integrated in the tensioning device (6) which is movable together with the tensioning element (5) and by means of which pressure can be exerted in intervals on the tensioning element (5) during the tensioning process.

8. Device in accordance with claim 7, characterized thereby, that the mechanical lift of the piezo-element (8) amounts to ca. 0.3 mm and that the forces exerted by the piezo-element (8) lie in the kN-range.

9. Device in accordance with claims 7 and 8, characterized thereby, that the tensioning element (5) is formed by a piezoelectric oscillator (15) in which pressure-pieces (16) are integrated which are movable on the surface (17) of the top sheet metal element (1) and of which the latter is impingable in the welding direction before the weld-focus (4) in accordance with the vibrations of the piezoelectric oscillator (15).

## Revendications

1. Procédé de soudage de tôles d'acier zingué (1,2) au moyen de faisceaux laser causant une déformation dressée de la tôle supérieure (1) jusqu'à son contact linéaire (10) avec la tôle inférieure (2) et soudant ensuite la tôle supérieure (1) avec la tôle inférieure (2) sur le contact linéaire (10) moyennant un faisceau laser concentré (3a),
caractérisé par le fait
qu'entre les tôles d'acier à souder (1,2) à proximité immédiate du point de soudage (4) des forces de serrage sont appliquées par un dispositif de serrage tournant (5,6) sur les tôles d'acier (1,2) et qu'en avance du point focal de soudage du faisceau laser (3a) la déformation dressée de la tôle supérieure (1) est causée par le dispositif de serrage (5,6).

2. Procédé suivant revendication 1 caractérisé par le fait que la déformation dressée de la tôle supérieure (1) est utilisée comme déformation plastique et élastique pour la réduction de la fente d'assemblage (7) des tôles d'acier 1,2).

3. Procédé suivant revendication 1, caractérisé par le fait que le contact linéaire (10) en avance du point focal de soudage entre les tôles supérieure et inférieure (1 et 2) est produit en intervalles par le mouvement ascensionnel d'un élément piézoélectrique (8) couplé au dispositif de serrage tournant (6) et mis en vibrations et que des poches de dégazage (12) sont réalisées latéralement au contact linéaire (10).

4. Procédé suivant revendication 1, caractérisé par le fait qu'en appliquant des contraintes propres de compression dans la zone supérieure (13) de la tôle supérieure (1) en formant en avance du point focal de soudage le contact linéaire (10) de la tôle supérieure (1) avec la tôle inférieure (2) la déformation de la tôle supérieure est réalisée de manière à faire apparaître dans la zone inférieure (14) de la tôle supérieure (1) des contraintes de traction, à faire courber en haut cette dernière à partir de la tôle inférieure (2) et à former des poches de dégazage (12) latéralement au contact linéaire (10).

5. Procédé suivant revendication 3, caractérisé par le fait que la déformation de la tôle supérieure (1) est réalisée en excitant un vibrateur piézoélectrique (15) dont les vibrations sont transmises sur des pièces de compression (16) intégrées dans le vibrateur piézoélectrique (15) et agitées sur la surface (17) de la tôle supérieure (1) et dont la dernière est alimentée conformément aux vibrations du vibrateur piézoélectrique (15).

6. Procédé suivant revendications 1 et 2, caractérisé par le fait que la déformation dressée de la tôle supérieure (1) est réalisée par un élément magnétostrictif.

7. Dispositif pour la réalisation du procédé suivant l'une des revendications 1 à 5 avec un laser et une optique laser (3),
caractérisé par le fait
qu'un dispositif de serrage tournant (6) est prévu pouvant appliquer à proximité immédiate du point de soudage (4) des forces de serrage sur les tôles d'acier (1,2), qu'en direction de soudage le dispositif de serrage (6) en avance par rapport au point focal de soudage peut être mis en prise avec la tôle supérieure (1) et qu'entre un élément de serrage (5) du dispositif de serrage (6) tournant et exerçant la force de serrage sur la tôle supérieure (1) et de sa production d'énergie de serrage un élément piézoélectrique (8) pouvant être mis en vibrations est intégré dans le dispositif de serrage (6) qui est amovible conjointement avec l'élément de serrage (5) et qui pendant le procédé de serrage peut exercer en intervalles une pression sur l'élément de serrage (5).

8. Dispositif suivant revendication 7, caractérisé par le fait que la course mécanique de l'élément piézoélectrique (8) est d'environ 0,3 mm et que les forces exercées par l'élément piézoélectrique (8) se situent dans la gamme kN.

9. Dispositif suivant revendications 7 et 8, caractérisé par le fait que l'élément de serrage (5) est formé par un vibrateur piézoélectrique (15) dans lequel sont intégrées des pièces de compression (16) amovibles sur la surface (17) de la tôle supérieure (1) et dont la dernière peut être alimentée en direction de soudage en avance du point focal de soudage (4) conformément aux vibrations du vibrateur piézoélectrique (15).
